(19) Europäisches Patentamt
European Patent Office
Office européen des brevets

(11) **EP 4 201 981 B1**

(12) **EUROPEAN PATENT SPECIFICATION**

(45) Date of publication and mention
of the grant of the patent:
**14.08.2024 Bulletin 2024/33**

(21) Application number: **21217270.4**

(22) Date of filing: **23.12.2021**

(51) International Patent Classification (IPC):
**C08J 5/18** *(2006.01)*    **C08L 23/06** *(2006.01)*
**C08L 23/08** *(2006.01)*    **B32B 27/32** *(2006.01)*
**B32B 7/12** *(2006.01)*    **B32B 27/08** *(2006.01)*

(52) Cooperative Patent Classification (CPC):
(C-Sets available)
**C08J 5/18; B32B 7/12; B32B 27/08; B32B 27/32;
C08L 23/06; C08L 23/0815;** B32B 2307/4023;
B32B 2307/7246; B32B 2439/40; B32B 2439/70;
B32B 2553/00; C08J 2323/06; C08J 2423/08;
C08L 2203/16; C08L 2205/025;    (Cont.)

(54) **MULTIMODAL POLYETHYLENE COMPOSITION**

MULTIMODALE POLYETHYLENZUSAMMENSETZUNG

COMPOSITION DE POLYÉTHYLÈNE MULTIMODALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.06.2023 Bulletin 2023/26**

(73) Proprietor: **Thai Polyethylene Co., Ltd.
10800 Bangkok (TH)**

(72) Inventors:
• **Narkchamnan, Kanyanut
10800 Bangkok (TH)**
• **Suchao-In, Natthaporn
10800 Bangkok (TH)**
• **Klomkamol, Warachad
10800 Bangkok (TH)**
• **Boonyang, Hathaichanok
10800 Bangkok (TH)**

• **Cheevasrirungruang, Watcharee
10800 Bangkok (TH)**

(74) Representative: **Erbacher, Martin
Boehmert & Boehmert
Anwaltspartnerschaft mbB
Pettenkoferstrasse 22
80336 München (DE)**

(56) References cited:
**EP-A1- 2 354 183    WO-A1-2013/113797
US-A1- 2019 359 738**

(52) Cooperative Patent Classification (CPC): (Cont.)
C08L 2207/068

C-Sets
**C08L 23/06, C08L 23/0815, C08L 23/0815;**
**C08L 23/0815, C08L 23/06, C08L 23/0815**

**Description**

TECHNICAL FIELD

The present invention relates to a multimodal polyethylene composition used for producing a stretched film that could be stretched in one direction or two directions. The invention further relates to a multilayer film comprising the film and an article comprising the multilayer film.

BACKGROUND ART

The global plastic packaging market trend is expected to grow the most in 2023. Manufacturers and brand owners looking to move toward a circular economy in which no material is wasted and plastic that used multiple times. Brands and retailers are setting themselves targets to ensure that their packaging will be recyclable, reusable, or compostable, there is growing interest in packaging and the environment, especially plastics, and increasing pressure on companies from both the general public such as The CEFLEX commits to collection of all flexible packaging and over 80% of the recycled materials channeled into valuable new markets and applications to substitute virgin materials by 2025 including the shareholders too.

Flexible plastic packaging mainly consists of multi-material and multilayer to enhance features such as barrier performance and product protection. Multilayer packaging comprises several film layers wherein each film layer is made from different polymer types (i.e, PP, PE, PET, Nylon, etc.) depending on their utility of uses. For example; (a) inner layer or seal layer (b) tie layer (c) barrier layer (d) outer layer or print layer. The outer layer or print layer is made from Biaxially Oriented Polyamide Film (BOPA film) or Biaxially Oriented Polyethylene Terephthalate Film (BOPET film) depending on packaging application. Those materials are superior in terms of heat stability and provide less thermal shrinkage during the printing process. However, different types of polymers in the packaging cannot be served for mono-material packaging (Full PE packaging). They represent a challenge for existing recycling systems, confronting circular economy principles.

The printing layer products used for mono-material on the market have Biaxially Oriented Polypropylene Film (BOPP film), Biaxially Oriented Polyethylene Film (BOPE film) and Machine Direction Orientation Film (MDOPE film). A variety of films, which may be applied as the single layer or to the core or the surface of the multi-layer films, are known in the art. Likewise, a variety of polymer compositions, in particular polyethylene compositions, for producing such films are described.

The common problem when using BOPE film for flexible plastic packaging is a high level of thermal shrinkage in the printing process and poor seal appearance in the bag-making process. Thermal shrinkage occurs after reheating process, resulting in a dimensional change in the film due to the movement of amorphous, and levels of crystallinity are of major importance to the shrinkage process.

Usually, the thermal shrinkage was improvement by increasing the final density of polyethylene resin for producing film. However, the increase of final density of polyethylene resin for producing film treads off with the stretchability and film clarity are haze and gloss properties. So, the challenge of Biaxially Oriented High Density Polyethylene film (BO-HDPE film) is balancing between low thermal shrinkage, high film clarity, and still good stretchability.

To balance the stretchability and thermal shrinkage of High-Density Polyethylene resin (HDPE resin), the HDPE material can be designed by using a multi-modal process. That can provide a better stretchability than bi-modal and uni-modal processes.

There are many prior arts tried to develop and disclose as below;
US 2014/179873 A1 discloses a polymer blend having low density of 5 to about 95 wt% of a first polyethylene copolymer having a density of from about 0.916 to about 0.936 g/cm$^3$, a melt index ($I_2$) of from about 0.1 to about 2.0 g/10 min, a melt flow ratio ($I_{21}/I_2$) of from about 32 to about 50, a molecular weight distribution (Mw/M n) of from about 3.6 to about 6.5, a reverse comonomer distribution profile as determined by GPC-FTIR, a multimodal TREF profile, a composition distribution breadth index $CDBI_{50}$ of from about 45 wt% to about 75 wt% as determined by TREF and which further satisfies the relationship: (Mw/M n) equal or greater than 72 ; and b) from about 95 to about 5 wt% of a second polyethylene copolymer which is a linear low density polyethylene (LLDPE) different from the first polyethylene copolymer and having a density of from about 0.910 to about 0.940 g/cm$^3$, a melt index ($I_2$) of from about 0.2 to about 5.0 g/10 min, and a melt flow ratio ($I_{21}/I_2$) of less than about 35.

US 2009/029182 A1 discloses multilayer "barrier" films which have excellent Water Vapor Transmission Rate (WVTR) performance are prepared using a core layer which comprises a blend of two different high density polyethylenes (HDPEs) and a nucleating agent. The films are suitable for the preparation of packages for dry foods such as crackers and breakfast cereals.

US 2005/170194 A1 mentions an essentially transparent, high density polyethylene film having a haze of 20% or less, a gloss of 40% or greater, and density within the range of 0.935 to 0.948 g/cc. The film is made by a high-stalk blown extrusion process and then uniaxially oriented in the machine direction and including the method comprises converting a polyethylene, which has a density within the range of 0.935 to 0.948 g/cc and an $MI_2$ within the range of 0.03 to 0.15 dg/min, into a film by a high-stalk blown extrusion and then orienting the film uniaxially in the machine direction. The oriented film is essentially transparent with a haze of 20% or less and a gloss of 40% or greater.

US 2019/0359738 A1 discloses multimodal polyethylene compositions having a similar DSC crystallinity as the present polyethylene compositions and are also used for making packaging articles such as containers.

However, also in light of the above prior art, there is still a need to provide multimodal polyethylene compositions for preparing films and films prepared by using such multimodal polyethylene compositions overcoming drawbacks of the prior art, in particular to provide high density polyethylene compositions for stretched films which can be used for preparing multilayer packaging and containers.

It is, therefore, an objective to provide a high density polyethylene composition overcoming drawbacks of the prior art, in particular having improved polyethylene properties for producing Biaxial Oriented Polyethylene (BOPE) or (Machine Direction Orientation (MDO) films with good properties.

## DISCLOSURE

### Multimodal polyethylene composition

In one aspect, the present invention provides multimodal polyethylene composition comprising:

(A) 40 to 52 percent by weight, preferably 40 to 50 percent by weight of a low molecular weight polyethylene, with respect to the total weight of the multimodal polyethylene composition, wherein the low molecular weight polyethylene is a homopolymer, the low molecular weight polyethylene has a weight average molecular weight (Mw) of 20,000 to 90,000 g/mol measured by Gel Permeation Chromatography,

(B) 10 to 28 percent by weight, preferably 10 to 26 percent by weight of a first high molecular weight polyethylene, with respect to the total weight of the multimodal polyethylene composition, wherein the first high molecular weight polyethylene is a homopolymer or a copolymer, and the first high molecular weight polyethylene has a weight average molecular weight (Mw) of from 300,000 to 900,000 g/mol, preferably 300,000 to 850,000 g/mol, more preferably 350,000 to 800,000 g/mol, and most preferably 400,000 to 750,000 g/mol measured by Gel Permeation Chromatography; and

(C) 25 to 50 percent by weight, preferably 26 to 50 percent by weight of a second high molecular weight polyethylene, with respect to the total weight of the multimodal polyethylene composition, wherein the second high molecular weight polyethylene is a homopolymer or a copolymer, wherein the second high molecular weight polyethylene has a weight average molecular weight (Mw) of from 130,000 to 500,000 g/mol, preferably 140,000 to 450,000 g/mol measured by Gel Permeation Chromatography;

wherein

the first high molecular weight polyethylene differs from the second high molecular weight polyethylene with respect to the weight average molecular weight;

a crystallinity of the multimodal polyethylene composition is from 49% to 65%, preferably 50% to 65%, and more preferably 52% to 65% measured by Differential Scanning Calorimetry; and

a number-averaged ($L_n$) value of linear-methylene sequence length of the multimodal polyethylene composition is from 1.90 nm to 4.80 nm, preferably 2.0 nm to 4.80 nm, and more preferably 2.8 nm to 4.8 nm and a weight-averaged ($L_w$) value of linear-methylene sequence length of the multimodal polyethylene composition is from 2.5 nm to 5.6 nm, preferably 3.0 nm to 5.6 nm, and more preferably 3.3 nm to 5.6 nm measured by DSC- Successive Self-nucleation and Annealing (SSA);

The multimodal polyethylene composition according to the present invention may be a polyethylene composition for producing a biaxial oriented polyethylene (BOPE) film.

The multimodal polyethylene composition of the invention is produced in a multistage process wherein fractions (A), (B) and (C) are produced in subsequent stages. In such a case, the properties of the fractions produced in the second step or the third step (or further steps) of the multistage process can either be inferred from polymers which are separately produced in a single stage by applying identical polymerisation conditions (e. g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e. g. in accordance with B. Hagstrom, Conference on Polymer Processing (The Polymer Processing Society), Extended Abstracts and Final Programme, Gothenburg, August 19 to 21, 1997, 4: 13.

Thus, although not directly measurable on the multistage process products, the properties of the fractions produced in higher stages of such a multistage process can be determined by applying either or both of the above methods. The skilled person will be able to select the appropriate method. One particular way of calculating the properties, such as the molecular weight (such as Mw) is applying a deconvolution process using Excel or other calculation programs. In the deconvolution process subtraction of the respective signals is carried out.

Polymer HDPEs produced in a multistage process are also designated as "in- situ" blends. The resulting end product consists of an intimate mixture of the polymers from the three or more reactors, the different molecular-weight-distribution curves of these polymers together forming a molecular-weight-distribution curve having a broad maximum or two or three or more maxima.

The density of multimodal polyethylene may be in the range from 0.935 to 0.960 $g/cm^3$ and more preferably 0.939 to 0.960 $g/cm^3$, even more preferred 0.943 to 0.960 $g/cm^3$, most preferred 0.943 to 0.956 $g/cm^3$ measured by ASTM D 1505.

The melt index/melt flow rate $MI_2$ of the multimodal polyethylene may be in the range from 0.01 to 2.5 g/10 min, preferably from 0.02 to 1.8 g/10 min, more preferably from 0.02 to 1.6 g/10 min., and most preferably 0.02 - 1.5 g/10 min

The Polydispersity index of the multimodal polyethylene composition may be from 12 to 40, preferably from 15 to 35, most preferred from 16 to 33 measured by Gel Permeation Chromatography (GPC).

The multimodal polyethylene composition may have a weight average molecular weight from 130,000 to 400,000 g/mol, preferably 140,000 to 350,000 g/mol, more preferred 150,000 to 300,000, and/or a number average molecular weight from 5,000 to 15,000 g/mol, preferably 7,000 to 13,000 g/mol, and/ or a Z average molecular weight from 1,000,000 to 3,000,000 g/mol, preferably 1,000,000 to 2,500,000 g/mol measured by Gel Permeation Chromatography (GPC), respectively.

The multimodal polyethylene composition may have a Fm/Fy equal or greater than 1, preferably from 1 to 5, more preferred 1 to 3, and most preferred 1 to 2, wherein Fm is tensile strength at break of the multimodal polyethylene composition; and Fy is a tensile strength at yield of the multimodal polyethylene composition, determined according to follow ISO 527-2, respectively.

The multimodal polyethylene composition according to this invention may further comprise LLDPE, LDPE, and optionally adding additives, depending on its purpose to use, for example nucleating agent, processing aid, antioxidants, and light stabilizer.

Polyethylene mixture

According to another aspect, the invention provides a polyethylene mixture (polyethylene blend) comprising the multimodal polyethylene composition according to the invention; and
a further constituent selected from the group consisting of a linear low density polyethylene, a low density polyethylene, an ultra low density polyethylene and a mixture of two or more thereof.

The addition of LLDPE, LDPE, ULDPE or mixtures thereof to the multimodal polyethylene composition to prepare the polyethylene mixture may be advantageous for producing a film for use as at least one layer of a multilayer film that having a stretching ratio of 1.5 to 4.5, a machine direction stretching ratio of 3 to 15, and a transverse direction stretching ratio of 3 to 12.

The polyethylene mixture may comprise the multimodal polyethylene composition according to the invention in an amount of 50 to 90 wt %, preferably 55 to 80 wt%, preferably 60 to 70 wt%, most preferred about 65 wt%, with respect to the total weight of the polyethylene mixture; and the further constituent selected from the group consisting of a linear low density polyethylene, a low density polyethylene, an ultra low density polyethylene and a mixture of two or more thereof in an amount of 10 to 50 wt %, preferably 20 to 45 wt%, preferably 30 to 40 wt%, most preferred about 35 wt%, with respect to the total weight of the polyethylene mixture.

The polyethylene mixture according to this invention may further comprise, besides LLDPE, LDPE, and ULDPE, optionally further additives, depending on its purpose to use, for example nucleating agent, processing aid, antioxidants, and light stabilizer.

Film

According to another aspect, the present invention provides a film comprising the multimodal polyethylene composition according to the invention or the polyethylene mixture according to the invention.

That is, according to the invention, there is provided a film comprising:

(A) 40 to 52 percent by weight, of a low molecular weight polyethylene, with respect to the total weight of the multimodal polyethylene composition, wherein the low molecular weight polyethylene is a homopolymer, the low molecular weight polyethylene has a weight average molecular weight (Mw) of 20,000 to 90,000 g/mol measured by Gel Permeation Chromatography, and the low molecular weight polyethylene

(B) 10 to 28 percent by weight, of a first high molecular weight polyethylene, with respect to the total weight of the multimodal polyethylene composition, wherein the first high molecular weight polyethylene is a homopolymer or a copolymer, and the first high molecular weight polyethylene has a weight average molecular weight (Mw) of more than 300,000 to 900,000 g/mol, preferable 300,000 to 850,000 g/mol, more preferably 350,000 to 800,000 g/mol, and most preferably 400,000 - 750,000 g/mol measured by Gel Permeation Chromatography; and

(C) 25 to 50 percent by weight of a second high molecular weight polyethylene, with respect to the total weight of the multimodal polyethylene composition, wherein the second high molecular weight polyethylene is a homopolymer or a copolymer, wherein the second high molecular weight polyethylene has a weight average molecular weight (Mw) of from 130,000 to 500,000 g/mol, preferably 140,000 to 450,000 g/mol measured by Gel Permeation Chromatography;

wherein

the first high molecular weight polyethylene differs from the second high molecular weight polyethylene with respect to the weight average molecular weight;

a crystallinity of the multimodal polyethylene composition is from 49% to 65% measured by Differential Scanning Calorimetry; and

a number-averaged ($L_n$) value of linear-methylene sequence length of the multimodal polyethylene composition is from 1.90 nm to 4.8 nm and a weight-averaged ($L_w$) value of linear-methylene sequence length of the multimodal polyethylene composition is from 2.5 nm to 5.6 nm measured by DSC- Successive Self-nucleation and Annealing (SSA);

and optionally further comprising a further constituent selected from the group consisting of a linear low density polyethylene, a low density polyethylene, an ultra-low density polyethylene and a mixture of two or more thereof;

wherein the polyethylene mixture preferably comprises the multimodal polyethylene composition according to the invention in an amount of 50 to 90 wt%, preferably 55 to 80 wt%, preferably 60 to 70 wt%, most preferred about 65 wt%, with respect to the total weight of the polyethylene mixture; and preferably comprises the further constituent selected from the group consisting of a linear low density polyethylene, a low density polyethylene, an ultra-low density polyethylene and a mixture of two or more thereof in an amount of 10 to 50 wt%, preferably 20 to 45 wt%, preferably 30 to 40 wt%, most preferred about 35 wt%, with respect to the total weight of the polyethylene mixture.

The film according to the invention may be a homogeneous film. Alternatively, the film may be inhomogeneous. If the film is inhomogeneous, it may be provided that the film comprises two or more sub-layers, for example three sublayers.

The inventive film may be a film having three sublayers, that is, two outer layers and an inner layer, wherein the two outer layers are arranged on opposite surfaces of the inner layer, respectively. In this regard, the inner layer may comprise (or consist of) the multimodal polyethylene composition according to the invention or may comprise (or consist of) the polyethylene composition according to the invention, wherein the two outer layers may comprise (or consist of) of low density polyethylene or linear low density polyethylene, preferably linear low density polyethylene (LLDPE). Such a film with two or more, for example three, sub-layers may be made by co-extrusion wherein the inner layer acts as a substrate on the surfaces of which a further polymer component is attached to form the outer layers by one or more extruders.

In other words, the film (which may be used to form the printing layer in the multilayer film described below) can, for example, be a homogeneous film made of 100% of the multimodal polyethylene composition according to the invention or of the polyethylene composition according to the invention; or may be a co-extruded film (more than 1 layer) in which a homogeneous film made of 100% of the multimodal polyethylene composition according to the invention or of the polyethylene composition according to the invention is at least one sublayer of the film. For example, improve the clarity of the film (low % Haze) a film comprising (or consisting of) the polyethylene composition according to the invention or a co-extruded film with LLDPE as skin layer may be preferred. The process to made co-extruded film is co-extrusion coating process.

The film according to the invention comprising the multimodal polyethylene composition according to the invention may be blown or obtained by casting and further co-extruding. The film may be prepared by heat stretching the film by biaxially sequential orientation, heat stretching the film by biaxially simultaneous orientation, heat stretching the film in machine direction..

The film may be a double bubble blown film, or a triple bubble blown film.

There are various options for film stretching process depending on purpose of use/process design/machine owner design/ end application. For example, there is one step of uniaxial stretching process at machine direction (MD) or more than one step of film stretching process, for examples, biaxial sequential stretching process at machine direction (MD) and transverse direction (TD) or biaxial simultaneous stretching process at machine direction (MD) and transverse direction (TD). All options of film stretching process have stretching ratio of 1.5 to 15.

Multilayer film

According to another aspect, the present invention provides a multilayer film comprising the film according to the present invention, that is, a film comprising the multimodal polyethylene composition or comprising the inventive polyethylene mixture.

In this regard, it may be provided that the multilayer film comprises two or more layers stacked on each other and at least one of the layers is the film according to the present invention. That is, the film comprising the multimodal polyethylene composition is at least one layer of multilayer film. The layers forming the multilayer film may be adhered to each other, optionally by using an adhesive.The multilayer film may comprise or consist of the following layers in this order: (a) an inner layer which may be referred to (and act) as a sealing layer; (b) a barrier layer, preferably with barrier properties against moisture and or water (water vapor); and (c) an outer layer which may be referred to (and act) as a printing layer, wherein the outer layer is the film according to the invention comprising the film according to the invention.

The multilayer film may comprise or consist of the following layers in this order: (a) an inner layer which may be referred to (and act) as a sealing layer; (b) a first adhesive layer which may be a first tie resin layer; (c) barrier layer, preferably with barrier properties against moisture and or water (water vapor); (d) a second adhesive layer which may be a second tie resin layer; and (e) an outer layer which may be referred to (and act) as a printing layer, wherein the outer layer is the film according to the invention comprising the film according to the invention.

The multilayer film may consist of the following layers in this order: (a) an inner layer which may be referred to (and act) as a sealing layer; (b) a first adhesive or tie layer which may be a first tie resin layer in direct contact with the inner layer; (c) barrier layer, preferably with barrier properties against moisture and or water (water vapor), in direct contact with the first adhesive layer; (d) a second adhesive layer which may be a second tie resin layer in direct contact with the barrier layer; and (e) an outer layer which may be referred to (and act) as a printing layer in direct contact with the second adhesive layer, wherein the outer layer is the film according to the invention comprising the film according to the invention.

The an inner layer, the first adhesive layer and the barrier layer may independently be made low density polyethylene (LDPE), linear low density polyethylene (LLDPE), medium density polyethylene (MDPE), high density polyethylene HDPE or a blending of two or more thereof.

The inner layer may be made of LDPE, LLDPE, MDPE or a blending of two or more thereof.

The first adhesive layer and the second adhesive layer may independently be made of LDPE, LLDPE, HDPE or a blending of two or more thereof, preferably LDPE, LLDPE or blending thereof. Alternatively, the adhesive layer may comprise a polyurethane based resin, an acrylic acid based resin, a polyvinyl based resin, rubber, or mixtures thereof. The

The barrier layer may be made of HDPE or a blending of HDPE and ethylene vinyl alcohol (EVOH) wherein the amount of EVOH is 3 to 5 % weight of total weight of multilayer. Alternatively, the adhesive layer may comprise a polyurethane based resin, an acrylic acid based resin, a polyvinyl based resin, rubber, or mixtures thereof.

The different layers of the multilayer film may be tied with each other by a lamination process to form a laminate. If the layers which shall be tied to each other are incompatible, that is, to not tie with each other in a lamination process, a tie layer (adhesive layer) may be arranged there between.

A "laminate" refers to a film structure comprising an inner layer and an outer layer attached to each other by lamination.

By using in the inventive multilayer the inventive film comprising the inventive multimodal polyethylene composition in particular in the printing layer instead of materials for printing layers known in the art, such as PET or Nylon, (that is, using a "monomaterial layer arrangement only based on polyethylene) recyclability, and/or heat stability and/or thermal shrinkage behavior of the multilayer film can be improved.

The multilayer film may be a coextruded multilayer film. The multilayer film may be prepared in a dry lamination process. The printing layer may be coated with barrier adhesive in order to prevent moisture, oxygen, aroma that are, as a vapor barrier, and also to allow bonding with other incompatible film layers. Then, the coated printing layer with the barrier adhesive may be laminated with the sealing layer or inner layer which is contacted directly to a product comprised inside a packaging prepared from the multilayer film. Respective multilayer films which may be used for manufacturing flexible packaging (i.e, food packaging, personal care packaging, homecare packaging and etc.) can be either a coextruded film or a laminate consisting of a combination of coextruded films.

Preferably, the film comprising the multimodal polyethylene is at least one layer of the multilayer film that is prepared for packaging or container for example, for food packaging, personal care packaging and homecare packaging.

Preferably, the film comprising the multimodal polyethylene composition according to the invention or the polyethylene mixture according to the invention is at least one layer of the multilayer film according to the invention which may be used for preparing a packaging or a container.

Article

According to another aspect, the present invention provides an article comprising the multilayer film according to the present invention, wherein the article is a packaging or a container.

The packaging or a container may be for storing, transporting etc. a consumers product, for example may be a food packaging, a personal care packaging or a personal- & homecare packaging. For example, the packaging may be used for storing, transporting etc. a vacuum processed food, a liquid softener, a detergent or the like.

Method for preparing the film

According to another aspect, the present invention provides a method for preparing the film according to the present invention, the method comprising blowing the film or casting and further co-extruding the film.

The method for preparing the film may further comprise, preferably as a subsequent step, heat stretching the film by biaxially sequential orientation, and/or heat stretching the film by biaxially simultaneous orientation, and/or heat stretching the film in machine direction orientation.

Method for preparing the multimodal polyethylene composition

The multimodal polyethylene composition may produce via a reactor system for multimodal polyethylene polymerization. The system comprises a first reactor, a second reactor, a third reactor and a hydrogen removal unit placed between the first reactor and the second reactor.

The hydrogen depleted polyethylene from the first reactor affects the polymerization of high molecular weight in the subsequent reactors. In particular, high molecular weight leads to improved mechanical properties of polyethylene.

The catalyst for producing the multimodal polyethylene resin of this invention may be selected from a Ziegler-Natta catalyst, a single site catalyst including metallocene-bases catalyst and non-metallocene-bases catalyst or chromium based might be used, preferably conventional Ziegler-Natta catalyst or single site catalyst is used. The catalyst is typically used together with co-catalysts which are well known in the art.

The polymerization in the first reactor, the second reactor and the third reactor may be carried out in the presence of an inert hydrocarbon. The inert hydrocarbon is preferably aliphatic hydrocarbon including hexane, isohexane, heptane, isobutane. Preferably, hexane (most preferred n-hexane) is used.

Coordination catalyst, ethylene, hydrogen and optionally $\alpha$-olefin comonomer may be polymerized in the first reactor. The entire product obtained from the first reactor may then be transferred to the hydrogen removal unit to remove 98.0 to 99.8% by weight of hydrogen, unreacted gas and some volatiles from the slurry obtained in the first reactor before being fed to the second reactor to continue the polymerization.

The polyethylene obtained from the second reactor is a bimodal polyethylene which is the combination of the product obtained from the first reactor and that of the second reactor. This bimodal polyethylene is then fed to the third reactor to continue the polymerization. The final multimodal (trimodal) polyethylene obtained from the third reactor is the mixture of the polymers from the first, the second and the third reactor. The polyethylenes prepared in each of the first, the second and the third reactor (corresponding to the constituents A to C of the inventive multimodal polyethylene composition) differ from each other, for example with respect to the weight average molecular weight thereof. It may be provided that the first high molecular weight polyethylene has a higher weight average molecular weight than the second high molecular weight polyethylene.

The polymerization in the first, the second and the third reactor may be conducted under different process conditions. As a result, the polyethylenes obtained in each reactor (corresponding to the constituents A to C) have a different molecular weight. These can be the variation in concentration of ethylene and hydrogen in the vapor phase, temperature or amount of comonomer being fed to each reactor. Appropriate conditions for obtaining a respective homo- or copolymer of desired properties, in particularly of desired molecular weight, are well known in the art. The person skilled in the art is enabled on basis of his general knowledge to choose the respective conditions on this basis. Preferably, low molecular weight polyethylene is produced in the first reactor, while a first high molecular weight polyethylene is produced in the second reactor and a second high molecular weight polyethylene is produced in the third reactor.

The term first reactor refers to the stage where the low molecular weight polyethylene (LMW) is produced. The term second reactor refers to the stage where the first high molecular weight polyethylene (HMW1) is produced. The term third reactor refers to the stage where the second high molecular weight polyethylene (HMW2) is produced.

The term LMW refers to the low molecular weight polyethylene polymer polymerized in the first reactor having a weight average molecular weight (Mw) of 20,000-90,000 g/mol.

The term HMW1 refers to the first high molecular weight polyethylene polymer polymerized in the second reactor having a weight average molecular weight (Mw) of more than 300,000 to 900,000 g/mol, preferable 300,000 to 850,000 g/mol, more preferably 350,000 to 800,000 g/mol, and most preferably 400,000 - 750,000 g/mol.

The term HMW2 refers to the second high molecular weight polyethylene polymer polymerized in the third reactor having the weight average molecular weight (Mw) of from 130,000 to 500,000 g/mol, preferably 140,000 to 450,000 g/mol.

The LMW may be produced in the first reactor in the absence of comonomer in order to obtain a homopolymer.

The ethylene may be polymerized in the first reactor in the absence of comonomer in order to obtain high density LMW polyethylene having density $\geq$0.965 g/cm$^3$ and MI$_2$ in the range of 10-1000 g/10min for LMW. In order to obtain the target density and MI in the first reactor, the polymerization conditions are controlled and adjusted. The temperature in the first reactor ranges from 70-90°C, preferably 80-85°C. Hydrogen is fed to the first reactor so as to control the molecular weight of the polyethylene. The molar ratio of hydrogen to ethylene in the vapor phase can be varied depending up on the target MI. However, the preferred molar ratio ranges from 0.01-8.0, more preferably 0.01-6.0. The first reactor is operated at pressure between 250 and 900 kPa, preferably 400-850 kPa. An amount of hydrogen present in the vapor phase of the first reactor is in the range of 0.1-95% by mole, preferably 0.1-90% by mol.

Before being fed to the second reactor, the slurry obtained from the first reactor containing LMW polyethylene preferably in hexane may be transferred to a hydrogen removal unit which may have a flash drum connected with depressurization equipment preferably including one or the combination of vacuum pump, compressor, blower and ejector where the pressure in the flash drum is reduced so that volatile, unreacted gas, and hydrogen are removed from the slurry stream. The operating pressure of the hydrogen removal unit typically ranges from 103-145 kPa(abs), preferably 104-130 kPa(abs) in which 98.0 to 99.8% by weight of hydrogen can be removed from the slurry, preferably 98.0 to 99.5% by weight and most preferred 98.0 to 99.1 % by weight.

In this invention, when 98.0 to 99.8% by weight of hydrogen is removed from the slurry and the polymerization in the second reactor is performed under these conditions of hydrogen content, (very) high molecular weight polymer can be achieved. The polymerization conditions of the second reactor are notably different from that of the first reactor. The temperature in the second reactor ranges from 65-90°C, preferably 68-80°C. The molar ratio of hydrogen to ethylene is not controlled in this reactor since hydrogen is not fed into the second reactor. Hydrogen in the second reactor is the hydrogen left over from the first reactor that remains in slurry stream after being flashed at the hydrogen removal unit. Polymerization pressure in the second reactor ranges from 100-3000 kPa, preferably 150-900 kPa, more preferably 150-400 kPa.

Hydrogen removal is the comparison result of the amount of the hydrogen present in the slurry mixture before and after passing through the hydrogen removal unit. The calculation of hydrogen removal is performed according to the measurement of gas composition in the first and the second reactor by gas chromatography.

After the substantial amount of hydrogen is removed to achieve the concentration described above, the slurry obtained in the hydrogen removal unit is transferred to the second reactor to continue the polymerization. In this reactor, ethylene can be polymerized with or without $\alpha$-olefin comonomer to form HMW1 polyethylene in the presence of the LMW polyethylene obtained from the first reactor. The $\alpha$-olefin comonomer that is useful for the copolymerization may include C$_{4-12}$, preferably 1-butene or 1-hexene.

After the polymerization in the second reactor, the slurry obtained therein is transferred to the third reactor to continue the polymerization.

The HMW2 is produced in the third reactor by polymerizing ethylene with optionally $\alpha$-olefin comonomer in the presence of LMW and HMW1 obtained from the first and second reactor. The $\alpha$-olefin comonomer that is useful for the copolymerization include C$_{4-12}$, preferably 1-butene and 1-hexene.

In order to obtain the, if desired, a preferred density and MI$_2$ in the third reactor, the polymerization conditions may be controlled and adjusted. However, the polymerization conditions of the third reactor are notably different from that of the first and second reactor. The temperature in the third reactor may range from 68-90°C preferably 68-80°C. Hydrogen is optionally fed to the third reactor so as to control the molecular weight of polyethylene. The molar ratio of hydrogen to ethylene can be varied depending up on the target MI. However, the preferred molar ratio ranges from 0.01-2.0. Polymerization pressure in the third reactor ranges from 250-900 kPa, preferably 250-600 kPa, and is controlled by the addition of inert gas such as nitrogen.

The final (free-flow) multimodal polyethylene composition may be obtained by separating hexane from the slurry discharged from the third reactor.

A process for producing the multimodal polyethylene composition may comprise;

(a) polymerizing ethylene in an inert hydrocarbon medium in the first reactor in the presence of a catalyst system, selected from Ziegler-Natta catalyst or metallocene, and hydrogen in an amount of 0.1-95% by mol with respect to the total gas present in the vapor phase in the first reactor to obtain a low molecular weight polyethylene having a weight average molecular weight (Mw) of 20,000 to 90,000 g/mol wherein the low molecular weight polyethylene, respectively the medium molecular weight polyethylene, has a density at least 0.965 g/cm3, and the low molecular weight polyethylene has $MI_2$ in the range from 10 to 1,000 g/10 min and the medium molecular weight polyethylene has $MI_2$ in the range from 0.1 to 10 g/10 min;

(b) removing in the hydrogen removal unit 98.0 to 99.8% by weight, such as 98.0 to 99.1% by weight of the hydrogen comprised in a slurry mixture obtained from the first reactor at a pressure in the range of 103-145 kPa (abs) and transferring the obtained residual mixture to the second reactor;

(c) polymerizing ethylene and optionally C4 to C12 $\alpha$-olefin comonomer in the second reactor in the presence of a catalyst system, selected from Ziegler-Natta catalyst or metallocene, and in the presence of hydrogen in an amount obtained in step (b) to obtain a first high molecular weight polyethylene having a weight average molecular weight of more than 400,000 to 750,000 g/mol in the form of a homopolymer or a copolymer and transferring a resultant mixture to the third reactor; and

(d) polymerizing ethylene, and optionally C4 to C12 $\alpha$-olefin comonomer in the third reactor in the presence of a catalyst system, selected from Ziegler-Natta catalyst or metallocene, and hydrogen, wherein the amount of hydrogen in the third reactor is in a range of 0.1-70% by mol, preferably 0.1-60% by mol, with respect to the total gas present in the vapor phase in the third reactor or optionally substantial absence of hydrogen to obtain a second high molecular weight polyethylene having a weight average molecular weight of from 140,000 to 450,000 g/mol homopolymer or copolymer.

Substantially absence" in this regard means that hydrogen is only comprised in the third reactor in an amount which cannot be avoided by technical means.

TECHNICAL EFFECTS

Unlike the methods known in the prior art, the method of the present invention does not require the use of multiple layers or blend of two or more resins.

In this invention, the printing layer of a multilayer film is made from PE has been developed to replace the existing printing layer (PET and Nylon). It aims to be one of the Circular Economy initiatives since the list of leading brands, retailers, packaging companies, and also resin manufacturers working towards using 100% reusable, recyclable or compostable packaging by 2025 or earlier has grown continuously. The Full PE solution based on a mono-material PE is one of the key challenges for flexible packaging, which is claimed to be as efficient in terms of performance and serves as a 100% substitute for multi-material film solutions. The monomaterial PE solution offers high stiffness with balanced dart impact and more efficient operations in MDO process, BOPE process, and other stretching processes itself, producing a film of high quality that enhances thermal stability (Low thermal shrinkage) during the printing process, laminate, and convert for packaging applications such as stand-up pouches.

Therefore, the multimodal polyethylene composition according to the present invention for formation of films for printing layers has been developed and solves this problem.

The LLDPE or LDPE known in the art has been used for producing film that can be stretched in the machine direction or biaxial oriented direction but those compositions cannot be used as the printing layer of container or packaging as LLDPE or LDPE film cannot resist the high temperature and it shows shrinkage. These disadvantages are overcome by the inventive multimodal polyethylene composition.

DEFINITIONS AND MEASUREMENT METHODS

As used herein "comprising" may be comprising in an amount of at least 50%, alternatively comprising in an amount of at least 80%, alternatively comprising in an amount of at least 90%, alternatively comprising in an amount of at least 95%, alternatively comprising in an amount of at least 98%, alternatively comprising in an amount of at least 99%, alternatively may mean "consisting of".

Resin Evaluation

MI$_2$: Melt flow rate (MFR), respectively melt flow index (MI$_2$) of polyethylene is measured according to ASTM D 1238 and indicated in g/10 min that determines the flowability of polymer under testing condition at 190°C with load 2.16 kg.

Density: Density of polyethylene is measured by observing the level to which a pellet sinks in a liquid column gradient tube, in comparison with standards of known density. This method is determination of the solid plastic after annealing at 100 °C follow ASTM D 1505.

Molecular weight and Polydispersity index (PDI): The weight average molecular weight (Mw), the number average molecular weight (Mn) and the Z average molecular weight (M$_Z$) in g/mol are analyzed by gel permeation chromatography (GPC). Polydispersity index is calculated by Mw/Mn. Around 8 mg of sample was dissolved in 8 ml of 1,2,4-trichlorobenzene at 160°C for 90 min. Then the sample solution, 200 $\mu$l, is injected into the high temperature GPC with IR5, an infared detector (Polymer Char, Spain) with flow rate of 0.5 ml/min at 145°C in column zone and 160°C in detector zone. The data is processed by GPC One® software, Polymer Char, Spain.

The multimodal polyethylene composition of the invention is produced in a multistage process wherein fractions (A), (B) and (C) are produced in subsequent stages. In such a case, the properties of the fractions produced in the second step or the third step (or further steps) of the multistage process can either be inferred from polymers which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagstrom, Conference on Polymer Processing (The Polymer Processing Society), Extended Abstracts and Final Programme, Gothenburg, August 19 to 21, 1997,4: 13.

Thus, although not directly measurable on the multistage process products, the properties of the fractions produced in higher stages of such a multistage process can be determined by applying either or both of the above methods. The skilled person will be able to select the appropriate method. One particular way of calculating the properties, such as the molecular weight (such as Mv) is applying a deconvolution process using Excel or other calculation programs. In the deconvolution process subtraction of the respective signals is carried out.

Polymer HDPEs produced in a multistage process are also designated as "in- situ" blends. The resulting end product consists of an intimate mixture of the polymers from the three or more reactors, the different molecular-weight-distribution curves of these polymers together forming a molecular-weight-distribution curve having a broad maximum or two or three or more maxima.

Crystallinity: The crystallinity is determined by Differential Scanning Calorimetry (DSC) as follows. Samples of polymer are pressed into a thin film at a temperature of 190 C. About 5 +/-0.5 mg of sample is weighted out and placed in a DSC pan. A lid is crimped on the pan to ensure a closed atmosphere. The sample pan is placed in the DSC (Brand: Mettler Toledo) cell and then heated at a high rate of about 50K/min from 50C to 200C with N$_2$ purge rate 25 ml/min. The sample is kept at this temperature, 200C for 5 minutes. Then the sample is cooled at a rate of 10K/min. with N$_2$ purge rate 25 ml/min. to a least 50C. The sample is then heated at a rate of 10K/min with N$_2$ purge rate 25 ml/min until melting is completed. Samples are identified by peak temperature and enthalpy, as well as the % crystallinity is calculated from the peak area.

DSC- Successive Self-nucleation and Annealing (SSA): Linear-methylene sequence length is evaluated by differential scanning calorimeter (DSC) through successive self-nucleation and annealing (SSA) method which has been reported elsewhere.[1] The multi-peak thermogram, obtained from DSC-SSA measurement, is firstly analyzed by using Gaussian-function fitting which those peaks are separated. Gibb-Thomson equation is used to estimate the linear crystallineable methylene sequence length ($l_i$), which is semi-quantitatively assumed to be equivalent to lamellar thickness, of each separated peak as expressed un eq. 1[1,2]

$$l_i = \frac{2\sigma T_m^0}{\Delta H_v\left(T_m^0 - T_{mi}\right)} \qquad \text{eq.1}$$

wherein $T^O_m$ is equilibrium melting temperature (146 °C for PE) and $T_{mi}$ is the melting temperature of each separated peak. s is the free energy of the folded surface for crystalline lamella ($7 \times 10^{-13}$ J/m$^2$) and $DH_v$ is enthalpy of fusion for a repeating unit ($288 \times 10^6$ J/m$^2$ for CH$_2$ unit).

The statistical number- averaged ($l_n$) and weight- averaged ($l_w$) values of the $l$ are calculated as shown in the following equations:[3]

$$l_n = \frac{n_1 l_1 + n_2 l_2 + \ldots + n_i l_i}{n_1 + n_2 + \ldots + n_i} = \sum f_i l_i$$

$$l_w = \frac{n_1 l_1^2 + n_2 l_2^2 + \ldots + n_i l_i^2}{n_1 l_1 + n_2 l_2 + \ldots + n_i l_i} = \frac{\sum f_i l_i^2}{\sum f_i l_i}$$

where $n_i$ is the normalized area of the separated peak. The number-averaged ($L_n$) and weight-averaged ($L_w$) values of linear-methylene sequence length are obtained from multiplying $l_n$ and $l_w$ by crystallinity fraction, respectively. The crystallinity fraction is calculated from dividing the total enthalpy of fusion for DSC- SSA thermogram by the theoretical 100% enthalpy of fusion for PE (293 J/g).

References:

1. Rungswang, W.; Saendee, P.; Thitisuk, B.; Pathaweeisariyakul, T.; Cheevasrirungruang, W. J. Appl. Polym. Sci. 2012, 128, 5, 3131.

2. Teng, H. X.; Shi, Y.; Jin, X. G.; J. Polym. Sci. Part B: Polym. Phy. 2002, 40, 2107.

3. Zhu, H,; Monrabal, B.; Han, C. C.; Wang, D. Macromolecules 2008, 41, 826.

Stretching Evaluation

*Tensile strength (Uniaxial stretching evaluation)*: The specimen is prepared as followed ISO 293. These test methods follow ISO 527-2. The testing employs a constant rate of grip separation, 50 mm/min at room temperature. The ratio of tensile strength at break (Fm) and tensile strength at yield (Fy) is calculated as Fm/Fy (Ratio). The ratio of Fm/Fy can be identified as (a). Good stretching ratio: Fm/Fy >,= 1, and (b). Poor stretching ratio: Fm/Fy < 1

*KARO- IV (Bi-stretching evaluation)*: PE resin (Pure multimodal polyethylene compositions) prepared with compression sheet at 190 °C, 2 mins under pressure 5 Mpa and quench sheet at 11°C 2 min. The compression sheet is then subject to be stretched using Karo IV in simultaneous mode at a stretching rate of 100%/ s, MD stretching ratio of 6 and TD stretching ratio of 6. The stretching temperature in the machine direction (MD) and transverse direction (TD) were the same at Specific stretching temperature (123-135 °C). To evaluate the stretchability of each material, a stretching ratio at break is recorded and compared.

*KARO- IV ( Bi- stretching evaluation)*: The mixture of multimodal polyethylene compositions (HDPE) with LLDPE or LDPE with compression sheet at 190 °C, 2 mins under pressure 5 Mpa and quench sheet at 11°C 2 min. The compression sheet is then subject to be stretched using Karo IV in sequential mode at a stretching rate of 100%/ s, MD stretching ratio of 4 and TD stretching ratio of 7. The stretching temperature in the machine direction (MD) and transverse direction (TD) were the same at Specific stretching temperature (123 °C). To evaluate the stretchability of each material, a TD stretching ratio at break is recorded and compared.

Film property

Thermal shrinkage of stretching film: Thermal shrinkage (%) is measured according to ASTM D-1204. A stretching film sample ( Film dimension: 10 cm × 10 cm) obtained from KARO-IV is evaluated under the condition of 100°C of hot air oven, place 15 min time. Then, the stretching film is cooled by leaving at ambient temperature. Measured machine direction (MD) and transverse direction (TD) size, the two-way size after the thermal contraction and the comparing rate of the two-way size of former state are percent thermal shrinkage. The % thermal shrinkage level can be identified as (a). Low thermal shrinkage: Equivalent or less than 4% and (b). High thermal shrinkage: more than 4%.

EXAMPLES

Reference is now be made in detail to the exemplary embodiments of the present invention. The exemplary embodiments are described below, in order to explain the aspects of the present invention without, however, necessarily limiting the invention thereto. Nevertheless; specific aspects thereof may, together with general aspects described herein for the disclosure of the invention, be material for realizing embodiments of the invention.

**1.** Preparation and properties of multimodal resin compositions

Inventive Examples from IE 1 to IE6 and Comparative Examples from CE1 to CE2 were prepared and carried out in a continuous process using three reactors connected in series. Ethylene, hydrogen, hexane, catalyst and co-catalyst were fed into a first reactor with the absence of comonomer as shown in amounts in Table 1. A commercial available Ziegler-Natta catalyst was used. Before being fed to the second reactor, the slurry obtained from the first reactor containing LMW polyethylene preferably in hexane may be transferred to a hydrogen removal unit to remove unreacted gas and some of hexane from polymer.

After the substantial amount of hydrogen was removed, the slurry obtained in the hydrogen removal unit was transferred to the second reactor to continue the polymerization. In this reactor, ethylene could be polymerized with or without $\alpha$-olefin comonomer to form HMW1 polyethylene in the presence of the LMW polyethylene obtained from the first reactor. The $\alpha$-olefin comonomer that was useful for the copolymerization may include $C_{4-12}$, preferably 1-butene or 1-hexene.

After the polymerization in the second reactor, the slurry obtained therein was transferred to the third reactor to continue the polymerization. The HMW2 was produced in the third reactor by polymerizing ethylene with optionally $\alpha$-olefin comonomer in the presence of LMW and HMW1 obtained from the first and second reactor. The $\alpha$-olefin comonomer that was useful for the copolymerization include $C_{4-12}$, preferably 1-butene and 1-hexene.

The obtaining multimodal PE product from the third reactor was dried and the resulting powder mixed with antioxidants and optionally additives before being extruded and granulated into pellets. Density and MI were obtained using the pelletized resins.

For Comparative Examples from CE4, The polymerization was carried out in a 10 liters autoclave reactor using 6 liters purified n-hexane as a diluent. A commercial available Ziegler-Natta catalyst was used. The suitable catalyst preparation is for example described in the Hungarian patent application number 0800771R. The used amount of catalyst as shown in Table 1 was added. 6.0 mmols of triethylaluminum were introduced. Thereafter, the temperature was heated to desired value and ethylene feeding was started. Hydrogen was dosed to reactor for adjusting melt flow rate of produced polymer in first reactor. Ethylene was fed continuously with keeping a total pressure of reaction. When desired amount of powder is made, the polymerization was stopped by releasing pressure and cooling down the slurry content. The second stage of the reaction was started by raising the temperature to desired value. Butene-1 comonomer was added in this step for producing copolymer in second stage. Ethylene was fed continuously with keeping a total pressure of reaction. The polymerization was stopped when a blending ratio of second stage had been reached. The polymerization was stopped by releasing pressure and cooling down the slurry content. The third stage of the reaction was started by raising the temperature to desired value. Butene-1 comonomer was added in this step for producing copolymer in third stage. Hydrogen was dosed to reactor for adjusting melt flow rate of produced polymer in third reactor. Ethylene was fed continuously with keeping a total pressure of reaction. The polymerization was stopped when a blending ratio of third stage had been reached. Polymerization was stopped by releasing pressure and cooling down the slurry content. The blending ratio can be calculated directly by comparing the amount of ethylene uptake during the different stages of polymerization for example described in patent application in patent number EP3293205B1.

Comparative Example 4 was synthesis from lab scale polymerization having out of the claimed range of multimodal polymer composition to compare to the inventive examples. Even though, it was different scale and polymerization condition for example, some differences in continuous and batch polymerization, but it could be applicable to use comparing to the inventive examples. This would be known and applied by the skilled person based on his general knowledge to adjust the polymerization condition for various reactor size in cliding lab to commercial scale.

Comparative Example 3, a bimodal polyethylene resin was prepared from slurry polymerization parallel in two reactors. The CE3 was selected to compare the stretching performance comparing to the inventive polymer compositions. The polymerization condition of CE3 was shown in Table 2.

With uniqueness of the inventive polymer compositions in Table 1 and a characteristic properties of these multimodal polymers in Table 3, it was surprisingly found that these compositions were advantageous when forming the inventive stretching film.

The polymerization condition and resin properties of inventive examples and comparative examples are shown in Table 1, 2 and 3 respectively.

*Inventive Example 1 (IE1)*

The multimodal polyethylene composition of inventive example (IE1) was carried out in three reactors in series in the method of preparation resulting in amounts of the polyethylene constituents in the claimed range (fraction (A) of 42% weight, fraction (B) of 18 % weight, fraction( C) of 40 % weight) as described in Table 1. A final $MI_2$ of IE1 was in the range 0.20 to 0. 35 9/10 minutes, and a final density was in the range 0.952 to 0.956 g/cm$^3$. With the advantageous polymer composition as shown in Table 3, the % crystallinity from DSC and the Ln and Lw from DSC-SSA were inside the inventive ranges. IE1 showed a good stretching ratio of 1.53 ("good" meaning greater than 1). As a result, a film obtained from IE1 showed good stretching property.

*Inventive Example 2 (IE2)*

Inventive Example 2 (IE2) was carried out in the same manner as Inventive example (IE1). As seen in Table 1, the polymer composition or percent by weight from each polymer composition of IE2 is the same as those of IE1, while a final $MI_2$ of IE2 was lower than a final $MI_2$ of IE1. A characteristic property of this multimodal polymer was shown in Table 3, the % crystallinity from DSC and the Ln and Lw from DSC-SSA were inside the inventive ranges. IE2 showed a good stretching ratio of **1.42** ("good" meaning greater than 1). As a result, a film obtained from IE2 showed good stretching property.

*Inventive Example 3 (IE3)*

Inventive Example 3 (IE3) was carried out in the same manner as Inventive example (IE1). The polymer composition or percent by weight from each polymer composition of IE3 was a little bit different comparing to those of IE1, while a final density of IE3 was lower than a final density of IE1 resulted in an improvement of stretching ratio significantly. As a result, a film obtained from IE3 showed very good stretching property (Fm/Fy >,= 1.5).

*Inventive Example 4 (IE4)*

Inventive Example 4 (IE4) was carried out in the same manner as Inventive example (IE1). The percent by weight of a low molecular weight polyethylene of IE4 was the same as those of IE1, while the other compositions were a little bit different. A final $MI_2$ of IE4 was higher than a final $MI_2$ of IE1, but a final density of IE4 was lower than a final density of IE1. As shown in Table 3, IE4 showed a good stretching ratio of 1.32 ("good" meaning greater than 1). As a result, a film obtained from IE4 showed good stretching property.

*Inventive Example 5 (IE5)*

Inventive Example 5 *(IE5)* was carried out in the same manner as Inventive example (IE5). The percent by weight of a low molecular weight polyethylene and a first high molecular weight polyethylene of IE5 was higher than those of IE1, while both final $MI_2$ and final density of IE5 was lower than those of IE1 resulted in an improvement of stretching ratio significantly. As a result, a film obtained from IE5 showed very good stretching property (Fm/Fy >,= 1.5).

*Inventive Example 6 (IE6)*

Inventive Example 6 (IE6) was carried out in the same manner as Inventive example (IE1). The polymer composition or percent by weight from each polymer composition of IE6 was different comparing to those of IE1, while a final density of IE3 was almost the same as those of IE1. A characteristic property of this multimodal polymer was shown in Table 3, IE6 showed a good stretching ratio of 1.32 ("good" meaning greater than 1). As a result, a film obtained from IE6 showed good stretching property.

*Comparative Example (CE1)*

Comparative Example 1 (CE1) was carried out in the same manner as Inventive example (IE1). The multimodal polyethylene composition of comparative example CE1 was prepared using split ratios in the method of preparation resulting in amounts of the polyethylene constituents in the claimed range (fraction (A) of 45% weight, fraction (B) of 10 % weight, fraction( C) of 45 % weight). However, the crystallinity from DSC and the Ln and Lw from DSC-SSA were outside the ranges defining the present invention. As a result, CE1 showed a poor stretching ratio (Fm/Fy < 1.0).

*Comparative Example 2 (CE2)*

Comparative Example 2 (CE2) was carried out in the same manner as Inventive example (IE1). The multimodal polyethylene composition of comparative example CE2 was prepared using split ratios in the method of preparation resulting in amounts of the polyethylene constituents out of the claimed range (fraction (A) of 56% weight, fraction (B) of 18 % weight, fraction( C) of 26% weight). The crystallinity from DSC and the Ln and Lw from DSC-SSA were outside the ranges defining the present invention resulting in a poor stretching ratio (Fm/Fy < 1.0).

*Comparative Example (CE3)*

The bimodal polyethylene resinobtained by slurry polymerization parallel in two reactors having the properties as shown in Table 2 was used. In detail, CE3 was a high density bimodal polyethylene having $MI_2$ of 7.5 g/10min and density of 0.964 g/cm$^3$. However, the crystallinity from DSC and the Ln and Lw values from DSC-SSA were outside the ranges defining the present invention. As a result, CE3 showed a poor stretching ratio (Fm/Fy < 1.0).

*Comparative Example 4 (CE4)*

Comparative Example 4 (CE4) was carried out in the same manner as Inventive example (IE1). The multimodal polyethylene composition of comparative example CE4 was prepared using split ratios in the method of preparation resulting in amounts of the polyethylene constituents out of the claimed range (fraction (A) of 22.4% weight, fraction (B) of 47 % weight, fraction( C) of 30.6 % weight). Although the crystallinity from DSC and the Ln and Lw from DSC-SSA were outside the ranges defining the present invention, it was surprisingly found that CE4 showed a good stretching ratio (Fm/Fy >, = 1.5).

**Table 1**: Process condition for preparing inventive examples (IE1- IE6) and comparative examples (CE1-CE2, CE4)

| Condition | Inventive Example IE1 | Inventive Example IE2 | Inventive Example IE3 | Inventive Example IE4 | Inventive Example IE5 | Inventive Example IE6 | Comparative Example CE1 | Comparative Example CE2 | Comparative Example CE4 |
|---|---|---|---|---|---|---|---|---|---|
| Catalyst (kgCat/tonC2 total) | 0.107 | 0.105 | 0.075 | 0.118 | 0.070 | 0.132 | 0.243 | 0.107 | 0.050 |
| **1st Reactor** | | | | | | | | | |
| Split ratio (% wt.) | 42 | 42 | 43 | 42 | 46 | 45 | 45 | 56 | 22.4 |
| 1st MI (g/10min, loaded 2.16 kg) | 746 | 651 | 743 | 236 | N/A | 936 | 863 | 336 | 48.4 |
| Temperature (°C) | 85 | 85 | 85 | 85 | 85 | 85 | 83 | 85 | 85 |
| Pressure total (barg) | 5.1 | 7.45 | 6.7 | 3.5 | 3.92 | 5.6 | 3 | 5.7 | 8 |
| C2 feed (kgC2/tonC2 total) | 420 | 420 | 430 | 420 | 460 | 450 | 450 | 560 | 224 |
| H2 feed (kgH2/tonC2 RX1) | 1.03 | 0.56 | 0.57 | 0.30 | 0.23 | 0.64 | 0.34 | 0.60 | 7.27 |
| In-situ-Mw (g/mol) | 46,318 | 45,966 | 38,000 | 56,756 | 65,435 | 42,500 | | 47,943 | |
| **2nd Reactor** | | | | | | | | | |
| Split ratio (% wt.) | 18 | 18 | 19 | 12 | 24 | 15 | 10 | 18 | 47 |
| Temperature (°C) | 80 | 80 | 80 | 80 | 80 | 80 | 70 | 80 | 75 |
| Pressure total (barg) | 3 | 3 | 3 | 3 | 3 | 3 | 1.5 | 3 | 3 |

EP 4 201 981 B1

(continued)

| 2nd Reactor | | | | | | | | | |
|---|---|---|---|---|---|---|---|---|---|
| C2 feed (kgC2/tonC2 total) | 180 | 180 | 190 | 120 | 240 | 150 | 100 | 180 | 469 |
| Comonomer type | 1-Butene | 1-Butene | 1-Butene | 1-Butene | 1-Butene | 1-Butene | - | 1-Butene | 1-Butene |
| Comonomer feed (kgC4/tonC2 RX2) | 53 | 40 | 30 | 50 | 22 | 55 | 0 | 2 | 135 |
| In-situ-Mw (g/mol) | 447,234 | 528,662 | 475,806 | 443,521 | 660,163 | 448,322 | | 662,993 | |
| 3rd Reactor | | | | | | | | | |
| Split ratio (% wt.) | 40 | 40 | 38 | 46 | 30 | 40 | 45 | 26 | 30.6 |
| Temperature (°C) | 80 | 80 | 75 | 75 | 75 | 80 | 70 | 80 | 75 |
| Pressure total (barg) | 3.4 | 3 | 3 | 3.2 | 3 | 3 | 3.07 | 3.2 | 3 |
| C2 feed (kgC2/tonC2 total) | 400 | 400 | 380 | 460 | 300 | 400 | 450 | 260 | 306 |
| H2 feed (kgH2/tonC2 RX3) | 0.42 | 0.15 | 0.01 | 0.59 | 0.01 | 0.6 | 1.95 | 0.24 | 0.38 |
| Comonomer type | 1-Butene | 1-Butene | 1-Butene | 1-Butene | 1-Butene | 1-Butene | 1-Butene | 1-Butene | 1-Butene |
| Comonomer feed (kgC4/tonC2 RX3) | 11 | 1 | 55 | 60 | 55 | 10 | 80 | 1 | 156 |

EP 4 201 981 B1

(continued)

| 3rd Reactor | | | | | | | | |
|---|---|---|---|---|---|---|---|---|
| In-situ-Mw (g/mol) | 195,658 | 304,367 | 388,421 | 157,955 | 335,807 | 165,711 | | 249,990 | |

**Table 2** Process condition of comparative example (CE3)

| Condition | Unit | Comparative Example CE3 |
|---|---|---|
| **1st Reactor** | | |
| Temperature | (°C) | 85 |
| 1st MI | g/ 10min (loaded 2.16 kg) | 7.0-7.7 |
| Pressure | kPa | 5.0 - 5.5 |
| Comonomer type | - | Butene-1 |
| **2nd Reactor** | | |
| Temperature | (°C) | 85 |
| Pressure | kPa | 5.0-5.5 |
| Comonomer type | - | 1-Butene |

**Table 3** Properties of polyethylene compositions and tensile property (Resin Property).

| Properties | Inventive Example (IE1) | Inventive Example (IE2) | Inventive Example (IE3) | Inventive Example (IE4) | Inventive Example (IE5) | Inventive Example (IE6) | Comparative Example (CE1) | Comparative Example (CE2) | Comparative Example (CE3) | Comparative Example (CE4) |
|---|---|---|---|---|---|---|---|---|---|---|
| MI$_2$, g/10min loaded 2.16kg | 0.28 | 0.07 | 0.04 | 1.28 | 0.05 | 0.61 | 1.73 | 0.19 | 7.50 | 0.08 |
| Density, g/cm$^3$ (Annealing 100 C) | 0.953 | 0.954 | 0.945 | 0.948 | 0.947 | 0.956 | 0.961 | 0.965 | 0.964 | 0.931 |
| Mw, g/mol | 193,881 | 268,040 | 286,007 | 157,282 | 284,975 | 162,500 | 152,311 | 234,769 | 91,010 | 358,100 |
| Mn, g/mol | 9,240 | 8,745 | 8,644 | 9,761 | 11,071 | 7,600 | 8,159 | 8,602 | 10,706 | 20,000 |
| Mz, g/mol | 1,351,335 | 1,909,453 | 1,769,905 | 1,350,670 | 1,936,026 | 1,296,700 | 1,195,478 | 2,073,592 | 709,266 | 1,999,700 |
| PDI | 20.9 | 30.6 | 33.0 | 16.1 | 25.7 | 21.3 | 18.6 | 27.2 | 8.5 | 17.9 |
| Crystallinity, % DSC | 61.0 | 63.2 | 52.8 | 54.8 | 56.1 | 63.1 | 68.0 | 72.7 | 69.5 | 43.5 |
| Ln-total, nm Ln = number average longest crystalline sequence length | 3.8 | 4.7 | 2.8 | 3.0 | 3.4 | 3.9 | 4.9 | 7.0 | 5.9 | 1.8 |
| Lw-total, nm Lw = weight average longest crystalline sequence length | 4.3 | 5.5 | 3.3 | 3.4 | 4.0 | 4.4 | 5.7 | 8.7 | 6.6 | 2.1 |
| Crystallinity, % -SSA, % | 71.0 | 72.4 | 62.1 | 65.0 | 64.2 | 72.4 | 76.3 | 81.8 | 79.8 | 48.6 |

(continued)

| Properties | Inventive Example (IE1) | Inventive Example (IE2) | Inventive Example (IE3) | Inventive Example (IE4) | Inventive Example (IE5) | Inventive Example (IE6) | Comparative Example (CE1) | Comparative Example (CE2) | Comparative Example (CE3) | Comparative Example (CE4) |
|---|---|---|---|---|---|---|---|---|---|---|
| Tensile Strength at yield (Fy), kg/cm$^2$ | 23.51 | 27.33 | 20.97 | 21.40 | 21.10 | 25.45 | 29.70 | 30.76 | 29.98 | 13.51 |
| Tensile strength at break (Fm) , kg/cm$^2$ | 36.05 | 38.79 | 38.37 | 28.31 | 36.17 | 33.62 | 17.31 | 25.47 | 17.18 | 20.93 |
| Fm/Fy ratio | 1.53 | 1.42 | 1.83 | 1.32 | 1.71 | 1.32 | 0.58 | 0.83 | 0.57 | 1.55 |

2. Preparation and testing of Bi-stretching films (KARO-IV)

As a result in Table 3, the multimodal polyethylene compositions of IE1-IE6 and CE4 showed a good stretching ratio (Fm/Fy > 1.0). So, these compositions were the potential to be evaluated the Bi-stretching performance measured by KARO-IV.

Table 4 illustrated Bi-stretching films were produced from the multimodal polyethylene compositions of IE1-IE6, and CE1-CE4 by KARO-IV. These Bi-stretching films were evaluated the % of thermal shrinkage according to ASTM D-1204. It was surprisingly found that the inventive composition of the multimodal polyethylene compositions of IE1-IE6 were advantageous when forming the inventive Bi- stretching film and performed a low % thermal shrinkage (Low thermal shrinkage: Equivalent or less than 4%).

**Table 4** (a). Results of simultaneous stretching evaluated on a lab-scale tenter frame stretcher (Bruckner KARO IV) and (b). % Thermal shrinkage at 100 C for 15 min of films collected from KARO.

| | Inventive Example (IE1) | Inventive Example (IE2) | Inventive Example (IE3) | Inventive Example (IE4) | Inventive Example (IE5) | Inventive Example (IE6) | Comparative Example (CE1) | Comparative Example (CE2) | Comparative Example (CE3) | Comparative Example (CE4) |
|---|---|---|---|---|---|---|---|---|---|---|
| | (a). Results of simultaneous stretching evaluated on a lab-scale tenter frame stretcher (Bruckner KARO IV) Where O means PASS (Stretching ratio at break equivalent or more than 5), X means FAIL (Stretching ratio at break < 5). | | | | | | | | | |
| Stretching ratio at break (>, = 5*5) at 123-135 C | O | O | O | O | O | O | X | X | X | O |
| | (b). % Thermal shrinkage at 100 C for 15 min of films collected from KARO (Stretching at 123-135 C) Where "-"means to that sample cannot be stretched, so the thermal shrinkage cannot be evaluated." | | | | | | | | | |
| Thermal shrinkage (%) MD | 2.0 | 0.5 | 3.0 | 2.0 | 3.0 | 1.5 | - | - | - | 8.7 |
| Thermal shrinkage (%) TD | 2.0 | 0.0 | 4.0 | 1.0 | 3.0 | 2.0 | - | - | - | 9.1 |

### 3. Polyethylene mixtures

The multimodal polyethylene compositions of IE1-IE6 can be selected as the blending partner to the group consisting of linear low-density polyethylene and low-density polyethylene and a mixture of two in the amount of 35 % by weight concerning the total weight of the polyethylene mixture.

The polyethylene mixtures of inventive multimodal polyethylene compositions were evaluated both stretching ratio (Fm/Fy) and bi-stretching performance measured by KARO-IV as shown in Table 5.

**Table 5** Examples of mixtures of inventive multimodal polyethylene compositions (HDPE) with LLDPE or LDPE, and their properties

| Property | Inventive Example 7 (IE7) | Inventive Example 8 (IE8) | Inventive Example 9 (IE9) |
|---|---|---|---|
| Portion of multimodal polyethylene composition according to the invention IE1 (HDPE; %wt) | 65 | 65 | 65 |
| Portion of LLDPE (%wt) | 35 | 35 | - |
| Portion of LDPE (%wt) | - | - | 35 |
| $MI_2$ (Load 2.16 kg, 190 °C) | 1.18 | 0.95 | 0.81 |
| Density (Annealing 100 °C) | 0.9404 | 0.9414 | 0.9424 |
| Fm/Fy ratio | 1.67 | 1.68 | 1.14 |
| Measured by ISO 527-2 | | | |
| TD Stretching ratio at break measured by KARO-IV at 123 °C ( at MD stretching ratio = 4) | 6.83 | 7.00 | 6.63 |

*Inventive Example 7 (IE7)*

IE7 was the polyethylene blend (polyethylene mixture) consisting of 65 wt% multimodal polyethylene composition according to the invention IE1 and 35 wt% LLDPE, wherein the synthesized LLDPE resin having MI2 of 3.5 g/10min and density of 0.915 g/cm3.

*Inventive Example 8 (IE8)*

IE8 was the polyethylene blend (polyethylene mixture) consisting of 65 wt% multimodal polyethylene composition according to the invention IE1 and 35 wt% LLDPE, wherein the synthesized resin having $MI_2$ of 2.5 g/10min and density of 0.918 g/cm3.

*Inventive Example 9 (IE9)*

IE9 was the polyethylene blend (polyethylene mixture) consisting of 65 wt% multimodal polyethylene composition according to the invention IE1 and 35 wt% LDPE, wherein the commercial resin (EL-Lene™ D777C) having $MI_2$ of 7.0 g/10 min and density of 0.920 g/cm3.

As illustrated in Table 5, examples 7, 8, and 9 showed Fm/Fy values greater than 1 that were 1.67, 1.68, and 1.14, respectively. After all inventive examples 7,8, 9 could achieve at machine direction (MD) stretching ratio equal to 4, then transverse direction (TD) stretching ratios at break measured by KARO-IV (sequential mode) at a temperature of 123 °C of inventive examples 7,8 and 9 were greater than 6. It would mean that the multimodal HDPE composition according to this invention was a good partner for a compound solution with LLDPE or LDPE for producing the stretched film.

The uniqueness of multimodal HDPE composition and portion of the first high molecular weight part in Example (IE1) could enhance the TD stretching ratio (more than 5) in various LLDPE types and LDPE.

The features disclosed in the foregoing description and in the dependent claims may, both separately and in any combination thereof, be material for realizing the aspects of the disclosure made in the independent claims, in diverse forms thereof

The features disclosed in the foregoing description and in the dependent claims may, both separately and in any combination thereof, be material for realizing the aspects of the disclosure made in the independent claims, in diverse forms thereof.

**Claims**

1. A multimodal polyethylene composition comprising:

   (A) 40 to 52 percent by weight of a low molecular weight polyethylene, with respect to the total weight of the multimodal polyethylene composition, wherein the low molecular weight polyethylene is a homopolymer, the low molecular weight polyethylene has a weight average molecular weight (Mw) from 20,000 to 90,000 g/mol measured by Gel Permeation Chromatography;
   (B) 10 to 28 percent by weight, of a first high molecular weight polyethylene, with respect to the total weight of the multimodal polyethylene composition, wherein the first high molecular weight polyethylene is a homopolymer or a copolymer, and the first high molecular weight polyethylene has a weight average molecular weight (Mw) from 300,000 to 900,000 g/mol measured by Gel Permeation Chromatography; and
   (C) 25 to 50 percent by weight of a second high molecular weight polyethylene, with respect to the total weight of the multimodal polyethylene composition, wherein the second high molecular weight polyethylene is a homopolymer or a copolymer, wherein the second high molecular weight polyethylene has a weight average molecular weight (Mw) of from 130,000 to 500,000 g/mol measured by Gel Permeation Chromatography;

   wherein

   the first high molecular weight polyethylene differs from the second high molecular weight polyethylene with respect to the weight average molecular weight;
   a crystallinity of the multimodal polyethylene composition is from 49% to 65% measured by Differential Scanning Calorimetry as described in the description; and
   a number-averaged ($L_n$) value of linear-methylene sequence length of the multimodal polyethylene composition is from 1.90 nm to 4.8 nm and a weight-averaged ($L_w$) value of linear-methylene sequence length of the multi-modal polyethylene composition is from 2.5 nm to 5.6 nm, measured by DSC- Successive Self-nucleation and Annealing (SSA) as described in the description.

2. The multimodal polyethylene composition according to claim 1, wherein the density of multimodal polyethylene is in the range from 0.935 to 0.960 gfcm3, measured according to ASTM D 1505.

3. The multimodal polyethylene composition according to claim 1 or 2, wherein the melt flow rate $MI_2$ of multimodal polyethylene is in the range from 0.01 to 2.5 g/10 min, measured according to ASTM D 1238.

4. The multimodal polyethylene composition according to any of the claims 1 to 3, wherein the polydispersity index of the multimodal polyethylene composition is from 12 to 40 measured by Gel Permeation Chromatography.

5. The multimodal polyethylene composition according to any of the claims 1 to 4, wherein the multimodal polyethylene composition has a weight average molecular weight from 130,000 to 400,000 g/mol; and/or a number average molecular weight from 5,000 to 15,000 g/mol; and/or a Z average molecular weight from 1,000,000 to 3,000,000 g/mol measured by Gel Permeation Chromatography, respectively.

6. The multimodal polyethylene composition according to any of the claims 1 to 5, wherein the multimodal polyethylene composition has Fm/Fy is from 1.0 to 1.9 wherein Fm is tensile strength at break of the multimodal polyethylene composition; and Fy is a tensile strength at yield of the multimodal polyethylene composition, determined follow ISO 527-2, respectively.

7. A polyethylene mixture comprising:

   the multimodal polyethylene composition according to any of the claims 1 to 6; and
   a further constituent selected from the group consisting of a linear low density polyethylene, a low density polyethylene, medium density polyethylene, an ultra-low density polyethylene and a mixture of two or more thereof in amount of 10 to 50 % by weight with respect to the total weight of the polyethylene mixture.

8. A film comprising the multimodal polyethylene composition according to any of the claims 1 to 6 or the polyethylene mixture according to claim 7.

9. A method for preparing a film according to claims 8, comprising blowing the film or casting and further co-extruding the film.

10. A method for preparing a film according to claims 9, further comprising a subsequent step of heat stretching the film by biaxially sequential orientation, and/or heat stretching the film by biaxially simultaneous orientation, and/or heat stretching the film in machine direction.

11. A film according to claim 8 and/or obtainable according to the method of any of claim 9 or 10, wherein the film has a stretching ratio of 1.5 to 4.5; and/ or machine direction stretching ratio of 3 to 15; and/or transverse direction stretching ratio of 3 to 12.

12. A multilayer film comprising the film according to any of the claims 8 to 11.

13. The multilayer film according to claim 12, comprising

(a) an inner layer;
(b) a first adhesive layer;
(c) barrier layer;
(d) a second adhesive layer; and
(e) an outer layer,

wherein the outer layer is the film according to any of the claims 8 to 11.

14. An article comprising the multilayer film according to claim 12 or 13, wherein the article is a packaging or a container.


**Patentansprüche**

1. Multimodale Polyethylenzusammensetzung, umfassend:

(A) 40 bis 52 Gewichtsprozent eines Polyethylens mit niedrigem Molekulargewicht, bezogen auf das Gesamtgewicht der multimodalen Polyethylenzusammensetzung, wobei das Polyethylen mit niedrigem Molekulargewicht ein Homopolymer ist, das Polyethylen mit niedrigem Molekulargewicht ein gewichtsgemitteltes Molekulargewicht (Mw) von 20.000 bis 90.000 g/mol, gemessen durch Gelpermeationschromatographie, aufweist;
(B) 10 bis 28 Gewichtsprozent eines ersten Polyethylens mit hohem Molekulargewicht, bezogen auf das Gesamtgewicht der multimodalen Polyethylenzusammensetzung, wobei das erste Polyethylen mit hohem Molekulargewicht ein Homopolymer oder ein Copolymer ist und das erste Polyethylen mit hohem Molekulargewicht ein gewichtsgemitteltes Molekulargewicht (Mw) von 300.000 bis 900.000 g/mol, gemessen durch Gelpermeationschromatographie, aufweist; und
(c) 25 bis 50 Gewichtsprozent eines zweiten Polyethylens mit hohem Molekulargewicht, bezogen auf das Gesamtgewicht der multimodalen Polyethylenzusammensetzung, wobei das zweite Polyethylen mit hohem Molekulargewicht ein Homopolymer oder ein Copolymer ist, wobei das zweite Polyethylen mit hohem Molekulargewicht ein gewichtsgemitteltes Molekulargewicht (Mw) von 130.000 bis 500.000 g/mol, gemessen durch Gelpermeationschromatographie, aufweist;

wobei

sich das erste Polyethylen mit hohem Molekulargewicht von dem zweiten Polyethylen mit hohem Molekulargewicht in Bezug auf das gewichtsgemittelte Molekulargewicht unterscheidet;
eine Kristallinität der multimodalen Polyethylenzusammensetzung von 49 % bis 65 %, gemessen durch Differentialscanningkalorimetrie, wie in der Beschreibung beschrieben, beträgt; und
ein zahlengemittelter (Ln)-Wert der linearen Methylensequenzlänge der multimodalen Polyethylenzusammensetzung von 1,90 nm bis 4,8 nm beträgt und ein gewichtsgemittelter (Lw)-Wert der linearen Methylensequenzlänge der multimodalen Polyethylenzusammensetzung von 2,5 nm bis 5,6 nm, gemessen durch DSC-Successive Self-Nucleation and Annealing (SSA), wie in der Beschreibung beschrieben, beträgt.

**2.** Multimodale Polyethylenzusammensetzung nach Anspruch 1, wobei die Dichte des multimodalen Polyethylens im Bereich von 0,935 bis 0,960 g/cm$^3$, gemessen gemäß ASTM D 1505, liegt.

**3.** Multimodale Polyethylenzusammensetzung nach Anspruch 1 oder 2, wobei die Schmelzflussrate MI$_2$ des multimodalen Polyethylens im Bereich von 0,01 bis 2,5 g/10 min, gemessen gemäß ASTM D 1238, liegt.

**4.** Multimodale Polyethylenzusammensetzung nach einem der Ansprüche 1 bis 3, wobei der Polydispersitätsindex der multimodalen Polyethylenzusammensetzung von 12 bis 40, gemessen durch Gelpermeationschromatographie, beträgt.

**5.** Multimodale Polyethylenzusammensetzung nach einem der Ansprüche 1 bis 4, wobei die multimodale Polyethylenzusammensetzung ein gewichtsgemitteltes Molekulargewicht von 130.000 bis 400.000 g/mol; und/oder ein zahlengemitteltes Molekulargewicht von 5.000 bis 15.000 g/mol; und/oder ein Z-gemitteltes Molekulargewicht von 1.000.000 bis 3.000.000 g/mol, jeweils gemessen durch Gelpermeationschromatographie, aufweist.

**6.** Multimodale Polyethylenzusammensetzung nach einem der Ansprüche 1 bis 5, wobei die multimodale Polyethylenzusammensetzung Fm/Fy von 1,0 bis 1,9 aufweist, wobei Fm die Bruchzugfestigkeit der multimodalen Polyethylenzusammensetzung ist; und Fy eine Streckzugfestigkeit der multimodalen Polyethylenzusammensetzung, jeweils gemäß ISO 527-2 bestimmt, ist.

**7.** Polyethylenmischung, umfassend:

die multimodale Polyethylenzusammensetzung nach einem der Ansprüche 1 bis 6; und
einen weiteren Bestandteil, ausgewählt aus der Gruppe, bestehend aus einem linearen Polyethylen mit niedriger Dichte, einem Polyethylen mit niedriger Dichte, einem Polyethylen mit mittlerer Dichte, einem Polyethylen mit ultraniedriger Dichte und einer Mischung von zwei oder mehr davon in einer Menge von 10 bis 50 Gew.-%, bezogen auf das Gesamtgewicht der Polyethylenmischung.

**8.** Film, umfassend die multimodale Polyethylenzusammensetzung nach einem der Ansprüche 1 bis 6 oder die Polyethylenmischung nach Anspruch 7.

**9.** Verfahren zum Herstellen eines Films nach Anspruch 8, umfassend das Blasen des Films oder Gießen und weiteres Coextrudieren des Films.

**10.** Verfahren zum Herstellen eines Films nach Anspruch 9, ferner umfassend einen nachfolgenden Schritt des Wärmedehnens des Films durch biaxial sequentielle Ausrichtung und/oder Wärmedehnens des Films durch biaxial gleichzeitige Ausrichtung und/oder Wärmedehnens des Films in Maschinenrichtung.

**11.** Film nach Anspruch 8 und/oder erhältlich nach dem Verfahren nach einem der Ansprüche 9 oder 10, wobei der Film ein Dehnungsverhältnis von 1,5 bis 4,5; und/oder ein Dehnungsverhältnis in Maschinenrichtung von 3 bis 15; und/oder ein Dehnungsverhältnis in Querrichtung von 3 bis 12 aufweist.

**12.** Mehrschichtfilm, umfassend den Film nach einem der Ansprüche 8 bis 11.

**13.** Mehrschichtfilm nach Anspruch 12, umfassend

(a) eine innere Schicht;
(b) eine erste Klebstoffschicht;
(c) eine Barriereschicht;
(d) eine zweite Klebstoffschicht; und
(e) eine äußere Schicht,

wobei die äußere Schicht der Film nach einem der Ansprüche 8 bis 11 ist.

**14.** Artikel, umfassend den Mehrschichtfilm nach Anspruch 12 oder 13, wobei der Artikel eine Verpackung oder ein Behälter ist.

**Revendications**

1. Composition à base d'un polyéthylène multimodal comprenant :

(A) un polyéthylène de bas poids moléculaire à un taux, rapporté au poids total de la composition à base d'un polyéthylène multimodal, qui va de 40 à 52 pour cent en poids, où le polyéthylène de bas poids moléculaire est un homopolymère et où le polyéthylène de bas poids moléculaire a une masse moléculaire moyenne en poids (Mw), mesurée par chromatographie par perméation de gel, dans la plage de 20 000 à 90 000 g/mol ;
(B) un premier polyéthylène de haut poids moléculaire à un taux, rapporté au poids total de la composition à base d'un polyéthylène multimodal, qui va de 10 à 28 pour cent en poids, où le premier polyéthylène de haut poids moléculaire est un homopolymère ou un copolymère et où le premier polyéthylène de bas poids moléculaire a une masse moléculaire moyenne en poids (Mw), mesurée par chromatographie par perméation de gel, dans la plage de 300 000 à 900 000 g/mol ; et
(C) un second polyéthylène de haut poids moléculaire à un taux, rapporté au poids total de la composition à base d'un polyéthylène multimodal, qui va de 25 à 50 pour cent en poids, où le second polyéthylène de haut poids moléculaire est un homopolymère ou un copolymère et où le second polyéthylène de haut poids moléculaire a une masse moléculaire moyenne en poids (Mw), mesurée par chromatographie par perméation de gel, dans la plage de 130 000 à 500 000 g/mol ;

où

le premier polyéthylène de haut poids moléculaire diffère d'avec le second polyéthylène de haut poids moléculaire en termes de masse moléculaire moyenne en poids ;
une cristallinité de la composition à base d'un polyéthylène multimodal, mesurée par calorimétrie différentielle à balayage (DSC) comme décrit dans la description, va de 49 % à 65 % ; et
une valeur moyenne en nombre *(L")* de la longueur de séquence méthylène linéaire de la composition à base d'un polyéthylène multimodal va de 1,90 nm à 4,8 nm, et une valeur moyenne en poids *($L_w$)* de la longueur de séquence méthylène linéaire de la composition à base d'un polyéthylène multimodal va de 2,5 nm à 5,6 nm, mesurées par DSC-Autonucléation et recuit successifs (SSA) comme décrit dans la description.

2. Composition à base d'un polyéthylène multimodal selon la revendication 1, où la densité du polyéthylène multimodal, mesurée conformément à la norme ASTM D 1505, est dans la plage de 0,935 à 0,960 g/cm$^3$.

3. Composition à base d'un polyéthylène multimodal selon la revendication 1 ou 2, où l'indice de fluidité à chaud MI$_2$ du polyéthylène multimodal, mesuré conformément à la norme ASTM D 1238, est dans la plage de 0,01 à 2,5 g/10 min.

4. Composition à base d'un polyéthylène multimodal selon l'une quelconque des revendications 1 à 3, où l'indice de polydispersité de la composition à base d'un polyéthylène multimodal, mesuré par chromatographie par perméation de gel, va de 12 à 40.

5. Composition à base d'un polyéthylène multimodal selon l'une quelconque des revendications 1 à 4, où la composition à base d'un polyéthylène multimodal a une masse moléculaire moyenne en poids qui va de 130 000 à 400 000 g/mol ; et/ou une masse moléculaire moyenne en nombre qui va de 5 000 à 15 000 g/mol ; et/ou un poids moléculaire moyen Z qui va de 1 000 000 à 3 000 000 g/mol, respectivement, mesurés par chromatographie par perméation de gel.

6. Composition à base d'un polyéthylène multimodal selon l'une quelconque des revendications 1 à 5, où la composition à base d'un polyéthylène multimodal a un Fm/Fy dans la plage de 1,0 à 1,9, où Fm est la contrainte de rupture en traction de la composition à base d'un polyéthylène multimodal ; et Fy est une résistance à la traction de la composition à base d'un polyéthylène multimodal, respectivement, déterminées conformément à la norme ISO 527-2.

7. Mélange à base de polyéthylène comprenant :

la composition à base d'un polyéthylène multimodal selon l'une quelconque des revendications 1 à 6 ; et
un constituant supplémentaire sélectionné dans le groupe consistant en un polyéthylène basse densité linéaire, un polyéthylène basse densité, un polyéthylène moyenne densité, un polyéthylène ultra-basse densité et un mélange de deux ou plus de ceux-ci à une quantité, rapportée au poids total du mélange à base de polyéthylène, dans la plage de 10 à 50 %.

**8.** Film comprenant la composition à base d'un polyéthylène multimodal selon l'une quelconque des revendications 1 à 6 ou le mélange à base de polyéthylène selon la revendication 7.

**9.** Méthode de préparation d'un film selon la revendication 8, comprenant un soufflage du film ou un moulage et une coextrusion supplémentaire du film.

**10.** Méthode de préparation d'un film selon la revendication 9, comprenant en outre une étape ultérieure d'étirage à chaud du film de façon séquentielle en orientation biaxiale et/ou d'étirage à chaud du film de façon simultanée en orientation biaxiale et/ou d'étirage à chaud du film dans le sens machine.

**11.** Film selon la revendication 8 et/ou obtenable selon la méthode de l'une quelconque des revendications 9 ou 10, où le film a un rapport d'étirage qui va de 1,5 à 4,5 ; et/ou un rapport d'étirage dans le sens machine qui va de 3 à 15 ; et/ou un rapport d'étirage dans le sens radial qui va de 3 à 12.

**12.** Film multicouches comprenant le film selon l'une quelconque des revendications 8 à 11.

**13.** Film multicouches selon la revendication 12, comprenant

(a) une couche interne ;
(b) une première couche adhésive ;
(c) une couche barrière ;
(d) une seconde couche adhésive ; et
(e) une couche externe,

où la couche externe est le the film selon l'une quelconque des revendications 8 à 11.

**14.** Article comprenant le film multicouches selon la revendication 12 ou 13, où l'article est un emballage ou un conteneur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014179873 A1
- US 2009029182 A1
- US 2005170194 A1
- US 20190359738 A1
- HU 0800771R
- EP 3293205 B1

**Non-patent literature cited in the description**

- **B. HAGSTROM.** *Conference on Polymer Processing (The Polymer Processing Society), Extended Abstracts and Final Programme, Gothenburg,* 19 August 1997, vol. 4, 13
- **RUNGSWANG, W. ; SAENDEE, P. ; THITISUK, B. ; PATHAWEEISARIYAKUL, T. ; CHEEVASRIRUNGRUANG, W.** *J. Appl. Polym. Sci.,* 2012, vol. 128 (5), 3131
- **TENG, H. X. ; SHI, Y. ; JIN, X. G.** *J. Polym. Sci. Part B: Polym. Phy.,* 2002, vol. 40, 2107
- **ZHU, H ; MONRABAL, B. ; HAN, C. C. ; WANG, D.** *Macromolecules,* 2008, vol. 41, 826